(19) Europäisches Patentamt / European Patent Office / Office européen des brevets

(11) **EP 2 162 702 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **08734872.8**

(22) Anmeldetag: **28.03.2008**

(51) Int Cl.:
**G01C 19/56** *(2012.01)*

(86) Internationale Anmeldenummer:
**PCT/EP2008/002502**

(87) Internationale Veröffentlichungsnummer:
**WO 2009/003541 (08.01.2009 Gazette 2009/02)**

(54) **CORIOLISKREISEL**

CORIOLIS GYRO

GYROSCOPE CORIOLIS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.06.2007 DE 102007030119**

(43) Veröffentlichungstag der Anmeldung:
**17.03.2010 Patentblatt 2010/11**

(73) Patentinhaber: **Northrop Grumman LITEF GmbH**
**79115 Freiburg (DE)**

(72) Erfinder: **GEIGER, Wolfram**
**79112 Freiburg (DE)**

(74) Vertreter: **Müller - Hoffmann & Partner Patentanwälte**
**Innere Wiener Strasse 17**
**81667 München (DE)**

(56) Entgegenhaltungen:
**EP-A- 1 515 119        EP-A2- 1 793 202**
**WO-A-95/34798        WO-A-02/066929**
**WO-A-03/058167        WO-A1-2006/113162**
**US-A1- 2004 211 257**

**Beschreibung**

Die Erfindung bezieht sich auf einen Corioliskreisel mit einer An-ordnung, die ein Substrat, mindestens vier Einzelstrukturen und Federelemente umfasst, wobei die Federelemente die Einzelstrukturen mit dem Substrat und untereinander koppeln, mit Kraftgebern und mit Abgriffen, wobei die Anordnung einen Anregungsmode besitzt, der von den Kraftgebern angeregt werden kann, und einen Detektionsmode, der von den Abgriffen gemessen werden kann, wobei der Detektionsmode bei angeregtem Anregungsmode bei einer Drehung des Corioliskreisels um eine sensitive Achse aufgrund einer Corioliskraft angeregt wird.

Corioliskreisel (Coriolis Vibrating Gyroscopes) kann man entsprechend der verwendeten Schwingungsmoden in zwei Klassen einordnen:

> 1. Form- und Biegeschwingungen (z.B. Weinglas (HRG:"Hemispherical Resonator Gyroscope"), Ring, Stab)
> 2. Feder-Masse-Systeme (z.B. Lin-Rot, Rot-Rot, Lin-Lin, wobei Lin-Rot bedeutet, dass der Anregungsmode lineare Bewegungen ("Lin") enthält und der Detektionsmode Drehbewegungen ("Rot"). Rot-Rot und Lin-Lin sind entsprechend definiert.)

In Bezug auf Vibrations- und Beschleunigungsempfindlichkeit haben die beiden Klassen spezifische Vor- und Nachteile:

1. Form- und Biegeschwingungen

*Vorteile*: Typischer Weise werden nach außen abgeschlossene Nutz-Moden (Anregungs- und Detektionsmode) verwendet, d.h. diese Moden übertragen keine Kräfte und Momente nach außen. Damit werden sie weder durch lineare Beschleunigungen noch durch Vibrationen (mit linearen und / oder rotatorischen Anteilen) angeregt. "Nach außen" bezieht sich auf die "Umgebung" des Substrats, (auf das Substrat selbst können durch die Bewegung von Masseelementen bzw. Einzelstrukturen lokal Kräfte oder Momente wirken, die sich aber insgesamt aufheben). Das Substrat wird auf ein Gehäuse oder eine Keramik (allgemein: einen "Träger") montiert, zum Beispiel geklebt oder gelötet. Auf diesen Träger werden durch abgeschlossene Moden keine Kräfte oder Momente übertragen. Exakt gilt diese Aussage allerdings nur, falls keine Fertigungstoleranzen zu berücksichtigen sind.

*Nachteile:* Die meisten bekannten Strukturen erfordern eine weiche Aufhängung (z.B. Ring, Stab; eine Ausnahme stellt das so genannte HRG (Hemispherical Resonator Gyroscope) dar, das wegen seiner "echt dreidimensionalen" Form jedoch aufwendige Fertigungsverfahren erfordert). Dadurch werden bei Beschleunigungen und Vibrationen die Strukturen relativ weit ausgelenkt, was bei vielen Kraftgebern (z.B. elektrostatischen) und Abgriffen (z.B. kapazitiven) zu Fehlern führt. Außerdem ist eine Quadraturkompensation, also ein "Auswuchten" der Struktur mit einem Stellglied kaum möglich, da die erforderlichen Kräfte zu groß sind.

2. Feder-Masse-Systeme

*Vorteile:* Aus P. Greiff, B. Boxenhorn, T. King, and L. Niles, "Silicon Monolithic Micromechanical Gyroscope", Tech. Digest, 6th Int. Conf. on Solid-State Sensors and Actuators (Transducers '91), San Francisco, CA, USA, June 1991, pp. 966-968 oder J. Bernstein, S. Cho, A.T. King, A. Kourepins, P. Maciel, and M. Weinberg, "A Micromachined Comb-Drive Tuning Fork Rate Gyroscope", Proc. IEEE Micro Electromechanical Systems Workshop (MEMS 93), Fort Lauderdale, FL, USA, Feb. 1993, pp. 143-148 oder DE 196 41 284 Cl sind Strukturen bekannt, bei welchen die Resonanzfrequenzen der Nutz-Moden deutlich unterhalb der Resonanzfrequenz der übrigen Moden liegen können, die durch Beschleunigungen und / oder Vibrationen angeregt werden können und ein wesentliches Fehlersignal verursachen. Moden, die ein wesentliches Fehlersignal verursachen. Moden, die ein wesentliches Fehlersignal verursachen, sind insbesondere Moden, die das Messsignal der Detektionsbewegung beeinflussen. Moden, die die Messung der Anregungsbewegung beeinflussen, sind typischerweise weniger schädlich.
*Nachteile:* Vibrationen und häufig auch lineare Beschleunigungen können einen oder beide Nutz-Moden anregen und dadurch Fehlersignale verursachen.

Drahratensensoren mit jeweils zwei Paaren von gegenphasig linear schwingenden Einzelsensoren und mit linearem Detektionsmode sind in der EP 1 515 119 A1, der EP 1 793 202 A2 sowie der WO 2006/113162 A1 beschrieben. Die WO 95/34798 beschreibt einen Corioliskreisel mit zwei seismischen Massen und einer Detektionsmode, die auf einer Drehschwingung der beiden seismischen Massen beruht.

Es ist daher die Aufgabe der Erfindung einen Drehratensensor auf der Basis der Feder-Masse-Systeme anzugeben, der eine reduzierte Empfindlichkeit gegenüber Beschleunigungen und Vibrationen aufweist.

Die Aufgabe wird erfindungsgemäß gelöst durch einen Corioliskreisel mit den kennzeichnenden Merkmalen des Anspruchs 1. Es werden Strukturen dieser Klasse vorgestellt, bei welchen beide Nutz-Moden (Anregungs- und Detektionsmode) abgeschlossen sind. Durch Beschleunigungen und Vibrationen können die Nutzmoden nicht angeregt werden und es entsteht kein Fehlersignal. Exakt gilt diese Aussage allerdings nur, falls keine Fertigungstoleranzen zu berücksichtigen sind. Der Corioliskreisel besteht aus einem Substrat sowie einer Vielzahl von Einzelstrukturen (mindestens zwei) und Federelementen. Die Einzelstrukturen sind über die Federelemente teilweise mit dem Substrat und teilweise untereinander so verbunden, dass die Anordnung mindestens zwei abgeschlossene Eigenmoden besitzt, von denen einer als Anregungsmode und der zweite als Detektionsmode verwendet werden kann. Mit Kraftgebern kann der Anregungsmode angeregt werden. Wird der Corioliskreisel um seine sensitive Achse gedreht, wirken aufgrund der Anregungsschwingung Coriolis-Kräfte, die den Detektionsmode anregen. Die Bewegung des Detektionsmode kann mit Abgriffen gemessen werden. Als Messgröße kann die Amplitude der resultierenden Schwingung verwendet werden.

Gemäß der vorteilhaften Ausgestaltung nach Anspruch 2 kann die Coriolis-Kraft durch Kraftgeber zurückgestellt werden, was zu einer besseren Auswertung aufgrund der fehlenden Auslenkung der Einzelstrukturen führt. Dafür sind Kraftgeber erforderlich, durch welche Momente bzw. Kräfte auf den Detektionsmode eingeprägt werden können. Die Amplitude des Rückstellmoments bzw. der Rückstellkraft ist dann ein Maß für die Winkelgeschwindigkeit.

Die Bewegung der Anregungsmode kann durch Abgriffe gemäß Anspruch 3 in einfacher Weise überprüft werden.

In vorteilhafter Weise sind Stellglieder für eine Quadraturkompensation gemäß Anspruch 4 bzw. Stellglieder für einen Frequenzabgleich gemäß Anspruch 5 vorgesehen, die jeweils gestellt oder geregelt ausgelegt sein können. Für hochgenaue Corioliskreisel, die mikrotechnisch gefertigt werden, sind Quadraturkompensation und Frequenzabgleich vorteilhaft. Beides kann zwar auch durch Lasertrimmen erreicht werden, ein solches Verfahren ist allerdings teuer. Stellglieder haben den Vorteil, dass der Abgleichprozess selbst sehr kostengünstig ist.

Gemäß der vorteilhaften Ausgestaltung nach Anspruch 6 werden Strukturen beschrieben, bei welchen die Resonanzfrequenzen der Nutz-Moden deutlich unterhalb der Resonanzfrequenzen der Moden liegen können, die durch Beschleunigungen und / oder Vibrationen angeregt werden können und ein wesentliches Fehlersignal verursachen. Dadurch werden vibrationsabhängige Fehler weiter reduziert. Diese Strukturen besitzen die Vorteile der Klasse "Form- und Biegeschwingungen" und der Klasse "Feder-Masse-Systeme", und vermeiden deren jeweiligen Nachteile.

Anbei zwei Fälle, mit welchen die Vorteile quantifiziert werden:

**1. Fall (Vorteil eines abgeschlossenen Detektionsmodes):**

Der Detektionsmode werde durch eine lineare Vibration bzw. akustisch genau mit der Frequenz, mit der der Anregungsmode betrieben wird (in der Regel ist das die Resonanzfrequenz des Anregungsmodes und bei abgestimmten Resonanzfrequenzen auch die des Detektionsmodes), angeregt. Die Amplitude der wirkenden Beschleunigung sei $a_0$. Sie wird im folgenden mit der Einheit "g" angegeben. Es wird vereinfachend angenommen, dass die Phase der Störkraft und die der Coriolis-Kraft identisch sind.

1. Variante: Der Detektionsmode ist eine "einfache" (nicht gegenphasige) lineare Schwingung. Die Beschleunigung ist dann nicht von einer Coriolisbeschleunigung zu unterscheiden und liefert ein Fehlsignal $\Omega_v$. Mit einer Resonanzfrequenz $f_0 = \omega_0/(2\pi) = 10$ kHz und einer Amplitude der Anregungsmode von 10 $\mu$m erhält man

$$\Omega_{v1} = \frac{a_0}{2\omega_0 x_0} \approx 450 \frac{°/s}{g} \quad 450\ °/s \quad \left(\text{für } a_0 = 1\,g\right)$$

2. Variante: Der Detektionsmode sei eine einfache Drehschwingung. Die Massenunwucht sei $k_2 = 1\%$. Das Fehlsignal entspricht dann näherungsweise

$$\Omega_{v2} \approx k_2 \frac{a_0}{2\omega_0 x_0} \approx 4{,}5 \frac{°/s}{g} \quad 4{,}5\ °/s \quad \left(\text{für } a_0 = 1\,g\right)$$

3. Variante: Der Detektionsmode entspricht dem Gegentakt von zwei gekoppelten Drehschwingungen (abgeschlossene Mode). Bei sonst ähnlichen Bedingungen wie für Variante 2 kann man davon ausgehen, dass die Massenunwucht ca. 100 mal kleiner ist ($k_3 = 100$ ppm). Das Fehlsignal entspricht dann näherungsweise

$$\Omega_{y3} \quad \Omega_{3/2} = k_3 \frac{a_0}{2\omega_0 x_0} = 0{,}045 \frac{°/s}{g} \approx 0{,}045 \ °/s \quad (\text{für } a_0 = 1g).$$

**2. Fall (Vorteil für Gegenstand nach Anspruch 6):**

Betrachtet werden Drehbeschleunigungsanteile in der Vibration mit Frequenzen deutlich unterhalb der im Folgenden diskutierten Resonanzfrequenzen.

Variante 1: Der Detektionsmode entspricht zwei gegenphasigen Drehschwingungen Die Resonanzfrequenz $\omega_{g11}$ des Gleichtakts der beiden gekoppelten Drehschwingungen sei kleiner als die Resonanzfrequenz $\omega_2$ des Gegentakts der beiden gekoppelten Drehschwingungen (d.h. des Detektionsmodes), z.B

$$\frac{\omega_{g11}}{\omega_2} \approx \frac{1}{2}$$

Variante 2: Der Detektionsmode entspricht zwei gegenphasigen. Drehschwingungen. Die Resonanzfrequenz $\omega_{g12}$ des Gleichtakts der beiden gekoppelten Drehschwingungen sei größer als die Resonanzfrequenz $\omega_2$ des Gegentakts der beiden gekoppelten Drehschwingungen (d.h. des Detektionsmodes), z.B

$$\frac{\omega_{g12}}{\omega_2} = \frac{1{,}5}{1}$$

Bei der beschriebenen Anregung erhält man für das Verhältnis der resultierenden Auslenkungen der Gleichtaktmoden von Variante 1 und Variante 2

$$\frac{x_{g11}}{x_{g12}} \approx \frac{\omega_{g12}^2}{\omega_{g11}^2} \approx 9$$

Da Fehler durch die Anregung des Gleichtaktmodes proportional zur Auslenkung des Gleichtaktmodes oder zum Quadrat der Auslenkung sind, werden die Fehler bei Variante 2 um den Faktor 9 bis 81 reduziert.

Gemäß Anspruch 7 werden die Strukturen so ausgelegt, dass die Resonanzfrequenzen der Nutz-Moden deutlich unterhalb der Resonanzfrequenzen aller anderen Moden liegen und Fehler bei Anregung dieser Moden reduziert werden.

Beispiele ergeben sich durch zwei gekoppelte gegenphasige lineare Schwingungen, die wiederum gegenphasig zueinander sind, als abgeschlossener Anregungsmode und durch zwei gekoppelte gegenphasige Drehschwingungen als abgeschlossener Detektionsmode (Lin-Rot) bzw. durch zwei gekoppelte gegenphasige Drehschwingungen als abgeschlossener Anregungsmode und durch zwei gekoppelte gegenphasige. Drehschwingungen als abgeschlossene Detektionsmode (Rot-Rot). Andere Beispiele besitzen drei abgeschlossene Eigenmoden, von denen beispielsweise ein Eigenmode als Anregungsmode und die beiden anderen Eigenmoden als Detektionsmoden bei Drehungen um unterschiedliche sensitive Achsen benutzt werden können.

Bei einer bevorzugten Ausgestaltung nach Anspruch 8 mit Schwingungen parallel zur Substratoberfläche lässt sich der Corioliskreisel in einfacher Weise herstellen, da keine Bewegungen senkrecht zur Substratoberfläche abgegriffen bzw. erzeugt werden müssen.

Gemäß einer vorteilhaften Ausgestaltung des Anspruchs 9 sind die Einzelstrukturen als entkoppelte Strukturen aus einer Anregungseinheit und einer Erfassungseinheit ausgebildet. Dadurch ergeben sich folgende Vorteile:

1. Die Anregungseinheit ist näherungsweise ideal geführt. Ein Fehlwinkel zwischen dem Antrieb für die Anregungseinheit und der Anregungsmode. führt naherungsweise zu keiner Anregung der Detektionsmode und damit zu keinem Fehlsignal.

2. Eine Auslenkung der Detektionsmode führt näherungsweise zu keiner Änderung der Antriebskraft, die auf die Anregungseinheit ausgeübt wird.

3. Zusammengefasst heißt das, dass ungewünschte Wechselwirkungen zwischen Anregungskraft auf die Anregungseinheit und der Bewegung der Detektionsmode stark unterdrückt werden.

Gemäß Anspruch 10 sind doppelt entkoppelte Strukturen aus einer Anregungseinheit, einem Coriolis-Element und einer Erfassungseinheit vorgesehen, was zusätzlich zu einer "Pickoff-Entkopplung" führt, das heißt, dass ein Fehlwinkel zwischen dem Abgriff der Erfassungseinheit und der Bewegung der Anregungseinheit näherungsweise zu keinem Fehlsignal führt.

In der bevorzugten Ausgestaltung nach Anspruch 13 sind vier Enzelstlukturen vorgesehen, mit welchen sich die abgeschlossenen Nutzmoden in einfacher Weise erzeugen lassen.

Ausführungsbeispiele der erfindungsgemäßen Corioliskreisel werden im Folgenden anhand der Figuren beschrieben.

Dabei zeigen

Fig.1      eine schematische Darstellung eines abgeschlossenen Feder-Masse-System Corioliskreisels mit linearen Schwingungen als Anregungsmode und Drehschwingungen als Detektionsmode,

Fig.2a    eine schematische Darstellung eines abgeschlossenen Feder-Masse-System-Corioliskreisels mit Drehschwingen als Anregungsmode und als Detektionsmode in einer ersten Variante,

Fig.2b    eine schematische Darstellung eines abgeschlossenen Feder-Masse-System-Corioliskreisels mit Drehschwingungen als Anregungsmode und als Detektionsmode in einer zweiten

Fig.3      Variante, eine schematische Darstellung eines abgeschlossenen Feder-Masse-System-Corioliskreisels mit linearen Schwingungen als Anregungsmode und als Detektionsmode,

Fig.4      eine schematische Darstellung eines abgeschlossenen Feder-Masse-System-Corioliskreisels mit linearen Schwingungen als Anregungsmode und als Detektionsmode.

Fig.5      eine schematische Draufsicht auf eine erste Variante eines Ausführungsbeispiels eines erfindungsgemäßen Corioliskreisels.

Fig.6      eine schematische Draufsicht auf eine zweite Variante des Ausführungsbeispiels eines erfindungsgemäßen Corioliskreisels,

Fig.7.     eine schematische Draufsicht auf eine dritte Variante des Ausführungsbeispiels eines erfindungsgemäßen Corioliskreisels,

Fig.8      eine schematische Draufsicht auf eine vierte Variante des Ausführungsbeispiels eines erfindungsgemäßen Corioliskreisels.

Fig.9      eine schematische Draufsicht auf eine fünfte Variante des Ausführungsbeispiels eines erfindungsgemäßen Corioliskreisels,

Fig.10     eine schematische Draufsicht auf eine sechste Variante des Ausführungsbeispiels eines erfindungsgemäßen Corioliskreisels.

Fig.11     eine schematische Draufsicht auf eine siebte Variante des Ausführungsbeispiels eines erfindungsgemäßen Corioliskreisels.

In den Figuren sind teilweise nicht alle identischen Teile mit identischen Bezugszeichen versehen, damit die Übersichtlichkeit gewahrt bleibt. Dem Fachmann wird sich allerdings aufgrund der beschriebenen Symmetrien und gleichen Darstellungen erschließen, welche Teile der Figuren zu welchen Bezugszeichen gehören.

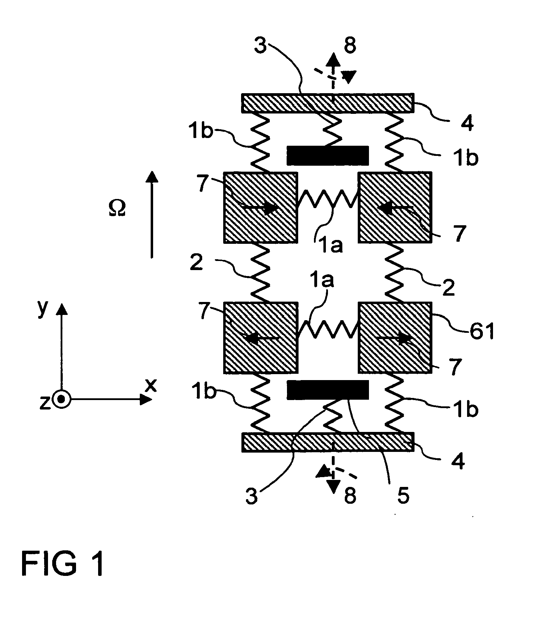

In den Figuren 1 bis 4 stellen alle hellgrau gezeichneten Komponenten bewegliche "Masseelemente" als Einzelstrukturen dar, die in erster Näherung als unendlich steif betrachtet werden können. Dunkelgrau (schwarz) gezeichnete Bereiche sind relativ zum Substrat weitgehend nicht beweglich.

In Fig.1 ist schematisch ein Corioliskreisel auf der Basis eines Feder-Masse-Systems dargestellt, mit vier ersten Masseelementen 61, die über erste x-Koppel-Federelemente 1a und über Koppel-Federelemente 2 untereinander und über zweite x-Koppel-Federelemente 1b und Verbindungselemente 4 und erste Substrat-Federelemente 3 mit einem Substrat 5 (hier nur über eine Verankerung dargestellt) gekoppelt sind. Als Anregungsmode 7 werden zwei gekoppelte gegenphasige lineare Schwingungen der Masseelemente 61, die wiederum gegenphasig zueinander sind, genutzt. Bei einer Drehung des Corioliskreisels um eine sensitive Achse $\Omega$ wird ein Detektionsmode 8 angeregt, der sich als zwei gekoppelte gegenphasige Drehschwingungen um eine y-Achse darstellen lässt, wobei die y-Achse parallel zur sensitiven Achse $\Omega$ und senkrecht zur x-Richtung liegt (Lin-Rot). Die x-Koppel-Federelemente 1a, 1b sind weich in x-Richtung, sonst hart, die Koppel-Federelemente 2 können isotrop, d.h. für alle Belastungen weich ausgebildet sein, die ersten Substrat-Federelemente 3 sind weich bei einer Rotation um die y-Achse, sonst hart ausgebildet. Bei diesem Corioliskreisel sind die Nutz-Moden (also die Anregungsmoden 7 und Detektionsmoden 8) abgeschlossen. Grundsätzlich können Anregungsmode und Detektionsmode auch vertauscht werden, das heißt, dass als Anregungsmode die beschriebenen zwei gekoppelten gegenphasigen Drehschwingungen um die y-Achse und als Detektionsmode die zwei gekoppelten gegenphasigen linearen Schwingungen genutzt werden.

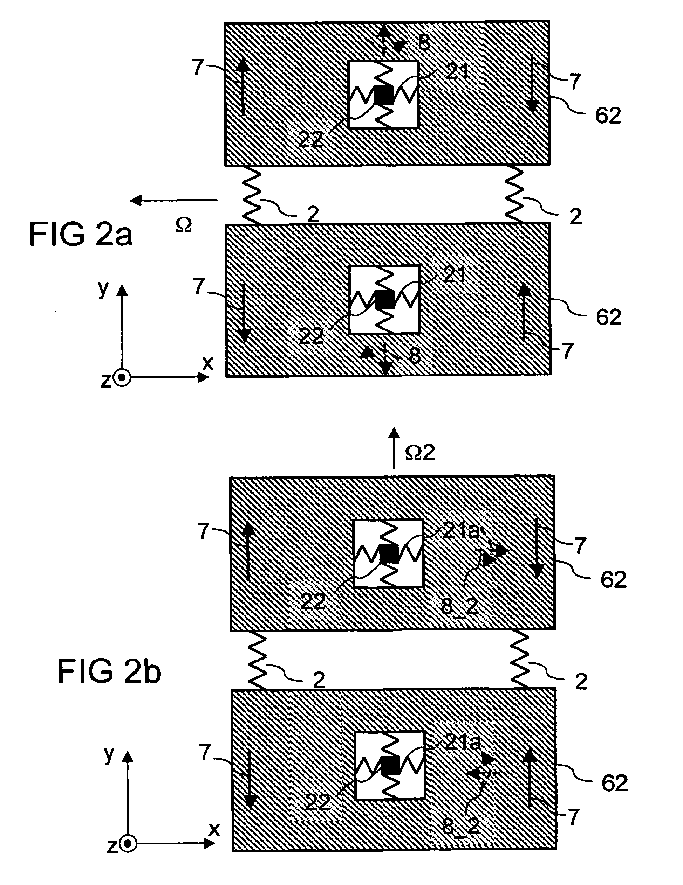

In Fig.2a ist schematisch ein Corioliskreisel auf der Basis eines Feder-Masse-Systems dargestellt, mit zwei zweiten Masseelementen 62, die über Koppel-Federelemente 2 untereinander und über zweite Substrat-Federelemente 21 mit einem Substrat 5 (hier nur über eine Verankerung 22 dargestellt) gekoppelt sind. Als Anregungsmode 7 werden zwei gekoppelte gegenphasige Drehschwingungen der Masseelemente 62 um die Substratverankerung 22 um eine z-Richtung benutzt. Bei Drehung des Corioliskreisels um seine sensitive Achse $\Omega$ werden als Detektionsmode zwei gekoppelte gegenphasige Drehschwingungen um eine y-Achse angeregt (Rot-Rot), die senkrecht zur sensitiven Achse $\Omega$ und senkrecht zur Drehachse z der Anregungsmode 7 liegt. Die zweiten Substrat-Federelemente 21 sind weich bei einer Rotation um die z- und y-Achse, sonst möglichst hart ausgebildet, die Koppel-Federelemente 2 können isotrop, d.h. für alle Belastungen weich ausgebildet sein. Auch bei diesem Corioliskreisel sind die Nutz-Moden (also die Anregungsmoden 7 und Detektionsmoden 8) abgeschlossen.

In Fig.2b ist schematisch der Corioliskreisel aus Fig. 2a dargestellt, wobei der gleiche Anregungsmode 7, also zwei gekoppelte gegenphasige Drehschwingungen der Masseelemente 62 um die Substratverankerung 22 um die z-Richtung benutzt wird. Die weiteren zweiten Substrat-Federelemente 21a sind weich bei einer Rotation um die z-, x- und y-Achse, sonst möglichst hart ausgebildet. Der gezeigte Corioliskreisel besitzt einen zweiten abgeschlossenen Detektionsmode 8_2, der bei einer Drehung des Corioliskreisels um eine zweite sensitive Achse $\Omega 2$ angeregt wird, und aus zwei gekoppelten gegenphasigen Drehschwingungen um eine x-Achse besteht. Der gezeigte Corioliskreisel kann daher auch als "zweiachsiger" Kreisel bezeichnet werden und weist damit drei abgeschlossene Moden auf, die als Anregungsmode und je nach sensitiver Achse als Detektionsmode verwendet werden können.

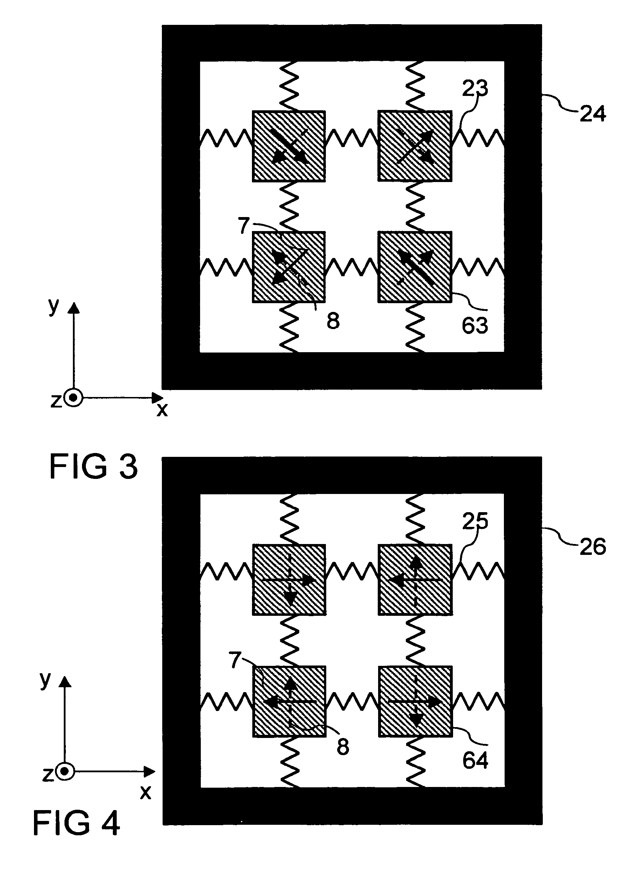

In Fig.3 ist schematisch ein Corioliskreisel auf der Basis eines Feder-Masse-Systems dargestellt, mit vier dritten Masseelementen 63, die über xy-Koppel-Federelemente 23 untereinander und mit einem Substrat 5 (hier nur über eine Verankerung 24 dargestellt) gekoppelt sind. Als Anregungsmode 7 werden lineare Schwingungen der Masseelemente 63 in 45˚ zur x-Richtung bzw. zur y-richtung benutzt. Dabei bewegen sich im gezeigten Beispiel zwei schräg gegenüberliegende dritte Masseelemente 63 Jeweils aufeinander zu, wenn sich die jeweils anderen zwei gegenüberliegenden dritten Masselemente 63 voneinander weg bewegen. Bei Drehung des Corioliskreisels um die sensitive Achse $\Omega$, die senkrecht zur x-Richtung und zur y-Richtung (und damit parallel zur z-Richtung) liegt, wird als Detektionsmode eine lineare Schwingung angeregt, die zur Anregungsmode verschoben ist (Lin-Lin). Dabei bewegen sich in x-Richtung benachbarte dritte Masseelemente 63 in x-Richtung-aufeinander zu, wenn sich in y-Richtung benachbarte dritte Masseelemente 63 in y-Richtung voneinander weg bewegen und die in x-Richtung benachbarten dritten Masseelemente 63 bewegen sich in x-Richtung voneinander weg, wenn sich die in y-Richtung benachbarten dritten Masseelemente 63 in y-Richtung aufeinander zu bewegen. Die xy-Koppel-Federelemente 23 sind weich in x-Richtung und in y-Richtung ausgelegt, sonst hart. Auch bei diesem Corioliskreisel sind die Nutz-Moden (also die Anregungsmoden 7 und Detektionsmoden 8) abgeschlossen.

In Fig.4 ist schematisch ein Corioliskreisel auf der Basis eines Feder-Masse-Systems dargestellt, mit vier vierten Masseelementen 64, die über weitere xy-Koppel-Federelemente 25 untereinander und mit einem Substrat 5 (hier nur über eine Verankerung 26 dargestellt) gekoppelt sind. Als Anregungsmode 7 werden lineare Schwingungen der vierten Masseelemente 64 in x-Richtung benutzt. Dabei bewegen sich zwei in x-Richtung benachbarte vierte Masseelemente 64 aufeinander zu, wenn sich die zwei anderen vierten Masseelemente 64 in x-Richtung voneinander weg bewegen. Bei Drehung des Corioliskreisels um die sensitive Achse $\Omega$, die senkrecht zur x-Richtung und zur y-Richtung (und damit parallel zur z-Richtung) liegt, wird als Detektionsmode eine lineare Schwingung angeregt, die zur Anregungsmode verschoben ist (Lin-Lin). Dabei bewegen sich zwei in y-Richtung benachbarte vierte Masseelemente 64 aufeinander zu, wenn sich die zwei anderen vierten Masseelemente 64 voneinander weg bewegen. Die weiteren xy-Koppel-Federelemente 25 sind weich in x-Richtung und in y-Richtung ausgelegt, sonst hart. Auch bei diesem Corioliskreisel sind die Nutz-Moden (also die Anregungsmoden 7 und Detektionsmoden 8) abgeschlossen.

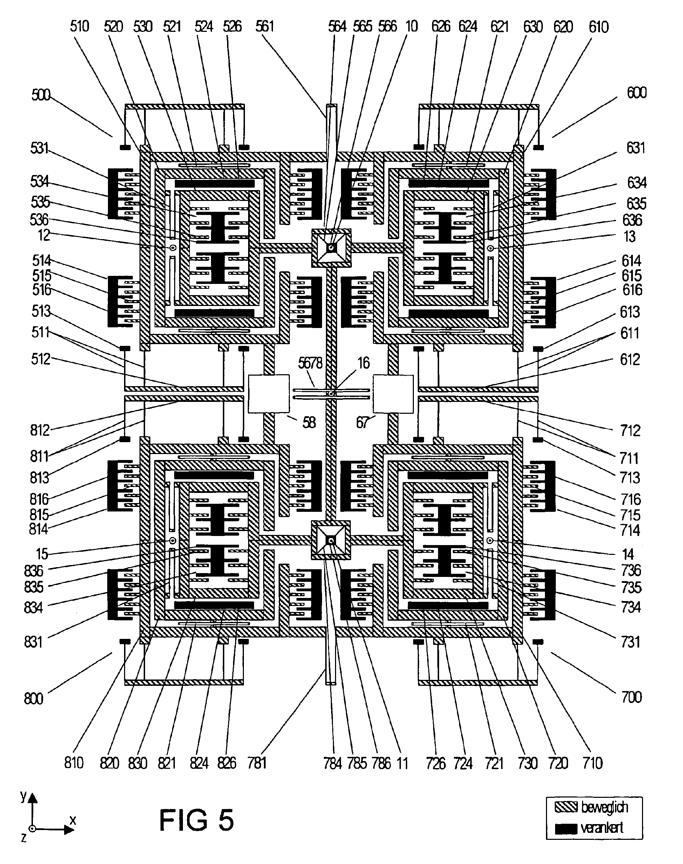

In den folgenden Figuren 5 bis 11 wird ein erfindungsgemäßes Ausführungsbeispiel anhand von einer ersten bis siebten Variante naher erläutert.

Bei der ersten bis siebten Variante steht die sensitive Achse Ω senkrecht zur Zeichenebene.

Alle hellgrau gezeichneten Komponenten stellen bewegliche "Masseelemente" dar, die in erster Näherung als unendlich steif betrachtet werden können. Dunkelgrau gezeichnete Bereiche sind relativ zum Substrat weitgehend nicht beweglich. Striche stellen Biegebalken dar, die als Komponente von Federelementen verwendet werden. In guter Näherung sind diese Biegebalken in Längsrichtung unendlich steif. Ist die Ausdehnung eines Biegebalkens in z-Richtung deutlich größer als die Ausdehnung in der Zeichenebene senkrecht zur Längsrichtung, sind die Biegebalken in z-Richtung wesentlich steifer als in Wichtung der Achse in der Zeichenebene senkrecht zur Längsrichtung. Häufig kann die Masse / das Trägheitsmoment der Biegebalken und auch von Masseelementen, die Teil einer Federkonstruktion sind, in guter Näherung vernachlässigt werden.

Im Folgenden werden die genannten Näherungen beispielsweise mit dem Hinweis "im Wesentlichen" verwendet.

Für die Fertigung der Varianten sind eine Vielzahl von Fertigungsverfahren geeignet, insbesondere auch mikrotechnische Verfahren. Alle Varianten können z.B. mit dem in der deutschen noch unveröffentlichten Patentanmeldung "Verfahren zur Herstellung eines Bauteils und Bauteil" mit gleichem Anmeldetag und gleichem Anmelder wie die vorliegende Anmeldung beschriebenen mikrotechnischen Fertigungsverfahren oder mit "konventionellen oberflächenmikromechanischen Prozessen" (z.B. Robert Bosch GmbH, Analog Devices) hergestellt werden.

Die in Fig. 5 gezeigte erste Variante besitzt ein Substrat (nicht dargestellt) und eine erste Einzelstruktur 500, eine zweite Einzelstruktur 600, eine dritte Einzelstruktur 700 und eine vierte Einzelstrukturen 800. Die erste Einzelstruktur 500 umfasst eine erste Anregungseinheit 510, die am Substrat über ein erstes x-Federelement 511 an einem ersten Ankerpunkt 513 befestigt ist. Über ein erstes y-Federelement 521 ist ein erstes Coriolis-Element 520. mit der ersten_ Anregungseinheit 510 verbunden. Über ein erstes x-Dreh-Federelement 531 ist eine erste Erfassungseinheit 530-mit dem ersten Coriolis-Element 520 verbunden.

Die zweite, dritte und vierte Einzelstruktur 600, 700, 800 sind in analoger Weise aus einer jeweiligen zweiten, dritten und vierten Anregungseinheit 610, 710, 810, aus einem jeweiligen zweiten, dritten und vierten x-Federelement 611, 711, 811, aus einem jeweiligen zweiten, dritten und vierten Ankerpunkt 613, 713, 813, aus einem jeweiligen zweiten, dritten und vierten y-Federelement 621, 721, 821, aus einem jeweiligen zweiten, dritten und vierten Coriolis-Element 620, 720, 820, aus einem jeweiligen zweiten, dritten und vierten x-Dreh-Federelement 631, 731, 831 und aus einer jeweiligen zweiten, dritten und vierten Erfassungseinheit 630, 730, 830 aufgebaut.

Die erste Anregungseinheit 510 ist mit der zweiten Anregungseinheit 610, wie auch die dritte Anregungseinheit 710 mit der vierten Anregungseinheit 810 jeweils direkt mit ersten Koppel-Federelementen 561 beziehungsweise 781 gekoppelt. Die erste und die vierte Anregungseinheit 510, 810, bzw. die zweite und die dritte Anregungseinheit 610, 710 sind jeweils direkt mit zweiten Koppel-Federelementen 58 beziehungsweise 67 gekoppelt. Die ersten und zweiten Erfassungseinheiten 530, 630 und die dritten und vierten Erfassungseinheiten 730, 830 sind direkt mit dritten Koppel-Federelementen 564 bzw. 784 gekoppelt und bilden eine erste und eine zweite gekoppelte Erfassungseinheit. Die erste gekoppelte Erfassungseinheit 530, 630 ist direkt mit der zweiten gekoppelten Erfassungseinheit 730, 830 über das vierte Koppel-Federelement 5678 gekoppelt.

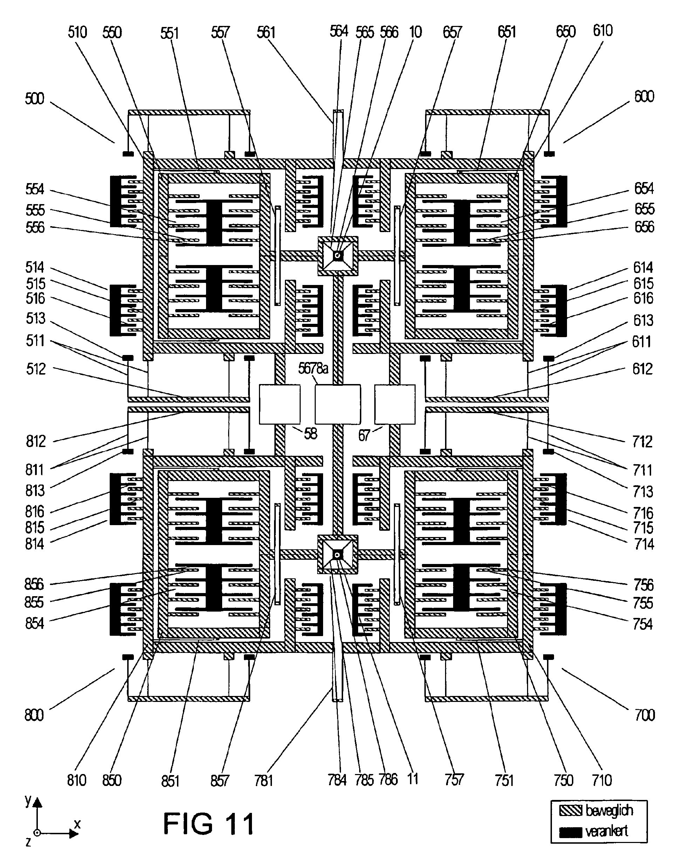

Die x-Federelemente 511, 611, 711, 811 sind weich in x-Richtung und möglichst steif in y- und z-Richtung. Sie sind mit massiven Elementen 512, 612, 712, 812 verbunden, um die Führungseigenschaften zu verbessern. Die y-Federelemente 521, 621, 721, 821 sind weich in y-Richtung und möglichst steif in x-und z-Richtung. Die y-Federelemente 521, 621, 721, 821 können auch einseitig ausgelegt sein, entsprechend den weiteren y-Federelementen 551, 651, 751, 851 in Fig. 11. Die x-Dreh-Federelemente 531, 631, 731, 831 sind so ausgelegt, dass sie in x-Richtung und bei Torsion um ihre jeweilige Symmetrieachse 12, 13, 14, 15 (von zwei in der Abbildung übereinander angeordneten Einzel-Federelementen) in z-Richtung weich, für alle anderen Belastungen steif ausgebildet sind. Die x-Dreh-Federelemente 531, 631, 731, 831 haben daher die Eigenschaft eines Gelenks, welches gleichzeitig eine relative Drehung und Abstandsänderung in x-Richtung zwischen den Coriolis-Elementen 520, 620, 720, 820 und den Erfassungseinheiten 530, 630, 730, 830 erlaubt.

Die ersten Koppel-Federelemente 561, 781 sind so ausgelegt, dass sie in x-Richtung weich, in z- und y-Richtung steif ausgebildet sind. Die dritten Koppel-Federelemente 564, 784, umfassend Biegebalken 565, 785 und Verankerung am Substrat 566, 786, sind so ausgelegt, dass sie bei Torsion um ihre Symmetrieachse in z-Richtung 10, 11 weich, für alle anderen Belastungen steif ausgebildet sind und somit auch als Drehfederelemente bezeichnet werden.

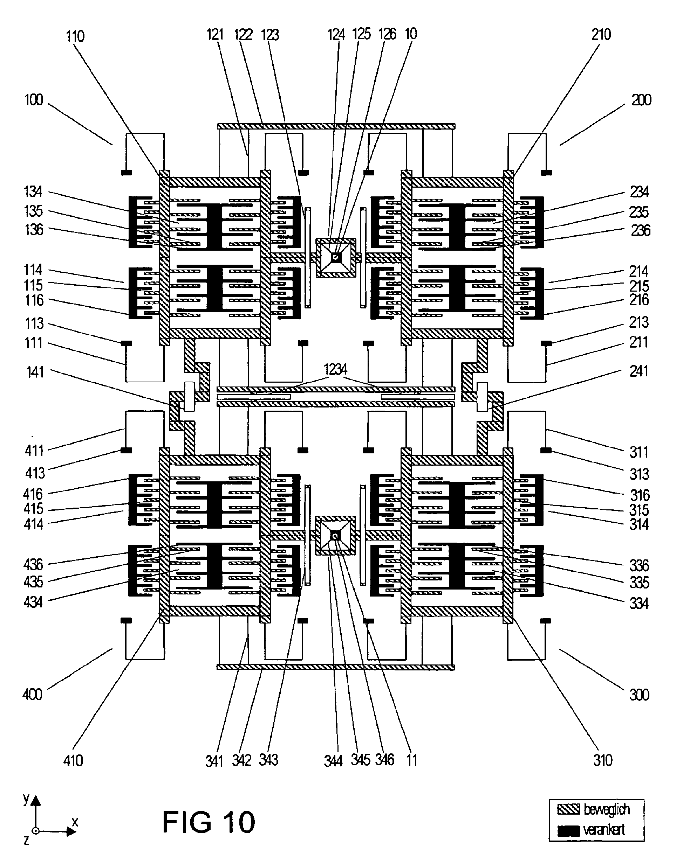

Die zweiten Koppel-Federelemente 58, 67 sind so ausgelegt, dass sie in x- und y-Richtung weich und in z-Richtung steif ausgebildet sind. Wie bei allen Federkonstruktionen zeigen die Figuren Konstruktionsbeispiele. Anstelle der zweiten Koppel-Federelemente 58, 67 können beispielsweise auch modifizierte Koppelfedern entsprechend der in Fig. 10 gezeigten Federn 141, 241 verwendet werden.

Das vierte Koppel-Federelement 5678 ist so ausgelegt, dass es in y-Richtung und bei Torsion um seine Symmetrieachse in z-Richtung 16 weich, für alle anderen Belastungen steif ausgebildet ist. Es sperrt die gleichphasige Rotation der Erfassungseinheiten 530, 630 und 730, 830.

Der Anregungsmode entspricht zwei linearen, gegenphasigen Schwingungen in Richtung der x-Achse der ersten und zweiten Anregungseinheiten 510, 610 zusammen mit den ersten und zweiten Coriolis-Elementen 520, 620 beziehungsweise der dritten und vierten Anregungseinheiten 710, 810 zusammen mit den dritten und vierten Coriolis-Elementen 720, 820, wobei die beiden gegenphasigen Schwingungen wiederum gegenphasig zueinander sind. Die Resonanzfrequenz des Anregungsmodes ergibt sich im Wesentlichen aus der Masse der Anregungseinheiten 510, 610, 710, 810 und der Coriolis-Elemente 520, 620, 720, 820 sowie aus den Federsteifigkeiten der Federelemente 511, 611, 711, 811, der zusätzlichen Federelemente 531, 631, 731, 831, der ersten Koppel-Federelemente 561, 781 und der zweiten Koppel-Federelemente 58, 67.

Der Detektionsmode entspricht einer Mischform aus Drehschwingungen und linearen Schwingungen. Dabei handelt es sich um zwei Drehschwingungen der ersten und zweiten Erfassungseinheiten 530, 630 um ihre Symmetrieachse 10 in z-Richtung beziehungsweise der dritten und vierten Erfassungseinheiten 730, 830 um ihre Symmetrieachse 11 in z-Richtung, wobei die beiden Drehschwingungen gegenphasig zueinander sind, während die ersten und zweiten Coriolis-Elemente 520, 620 bzw. die dritten und vierten Coriolis-Elemente 720, 820 dabei eine "Art Drehschwingung" ausführen. Sie sind durch die ersten und zweiten y-Federelemente 521, 621 bzw. die dritten und vierten y-Federelemente 721, 821 relativ zu den ersten und zweiten Anregungseinheiten 510, 610 bzw. den dritten und vierten Anregungseinheiten 710, 810 in y-Richtung geführt und durch die ersten und zweiten x-Dreh-Federelemente 531, 631 bzw. die dritten und vierten x-Dreh-Federelemente 731, 831 gegenüber der entsprechenden ersten und zweiten Erfassungseinheit 530, 630 bzw. der dritten und vierten Erfassungseinheit 730, 830 drehbar. Die Resonanzfrequenz des Detektionsmodes ergibt sich im Wesentlichen aus den Massen / Trägheitsmomenten der Coriolis-Elemente 520, 620, 720, 820 und der Erfassungseinheiten 530, 630, 730, 830 sowie den Federsteifigkeiten v.a. des vierten Koppel-Federelements 5678, der dritten Koppel-Federelemente 564, 784, der x-Dreh-Federelemente 531, 631, 731, 831 und der y- Federelemente 521, 621, 721, 821.

Die ersten bis vierten Einzelstrukturen 500, 600, 700, 800 besitzen jeweils einen ersten bis vierten Kraftgeber 514, 614, 714, 814, mit welchen der Anregungsmode angeregt wird. Entweder werden diese Kraftgeber 514, 614, 714, 814 auch als Abgriff für die Anregungsschwingung ausgelegt oder es können zusätzliche Abgriffe vorgesehen werden. Im dargestellten Beispiel werden als Kraftgeber 514, 614, 714, 814 so genannte Kammantriebe gezeigt.

Die benutzten Begriffe "Kammantriebe" und "Plattenkondensatoranordnungen" sind in dieser Anmeldung folgendermaßen zu verstehen:

- Ein "Kammantrieb" ist eine Anordnung aus plattenförmigen Kondensatoren mit "eintauchenden" Elektroden, das heißt, dass sich der Überlapp der Elektroden ändert. Meistens werden gleiche Elektrodenabstände auf beiden Seiten einer eintauchenden Elektrode gewählt.
- Eine "Plattenkondensatoranordnung" ist eine Anordnung aus plattenförmigen Kondensatoren, bei welcher der Elektrodenabstand bei einer Bewegung verändert wird. Mögliche Realisierungen dafür sind zum einen ein unterschiedlicher Elektrodenabstand auf beiden Seiten einer beweglichen Elektrode (wenn nur die Frequenz verstimmt werden soll, kann auch ein gleicher Elektrodenabstand gewählt werden) und zum anderen feststehende Elektroden auf beiden Seiten einer beweglichen Elektrode auf jeweils unterschiedlichem Potential.

Die Kammantriebe in Fig. 5 bestehen aus bewegten Elektroden 515, 615, 715, 815, die in den Anregungseinheiten 510, 610, 710, 810 integriert sind, und aus am Substrat verankerten Elektroden 516, 616, 716, 816. Kammantriebe können gleichzeitig als Kraftgeber und als Abgriff verwendet werden.

Die ersten bis vierten Einzelstrukturen 500, 600, 700, 800 besitzen jeweils einen ersten bis vierten Abgriff 534, 634, 734, 834, mit welchen die Detektionsschwingung erfasst wird. Entweder werden für den rückgestellten Betrieb diese Abgriffe auch als Kraftgeber für die Kompensation der Coriolis-Kraft ausgelegt oder es sind ggf. zusätzlich Kraftgeber vorzusehen. Im dargestellten Beispiel werden als Abgriffe Plattenkondensatoranordnungen gezeigt, wobei sich bei der Detektionsbewegung der Plattenabstand ändert. Die Abgriffe bestehen jeweils aus ersten bis vierten bewegten Elektroden 535, 635, 735, 835, die in den jeweiligen Erfassungseinheiten 530, 630, 730, 830 integriert sind, und aus ersten bis vierten am Substrat verankerten Elektroden 536, 636, 736, 836. Plattenkondensatoranordnungen können gleichzeitig als Kraftgeber und als Abgriff verwendet werden.

Hervorzuheben ist, dass als Abgriff (und / oder als Kraftgeber) für die Detektionsschwingung auch Kammantriebe verwendet werden können, da die Erfassungseinheiten die Anregungsbewegung nicht durchführen. Plattenkondensatoranordnungen mit Änderung des Plattenabstands als Abgriff für die Detektionsschwingung haben die Eigenschaft, dass die anliegende elektrische Spannung die Resonanzfrequenz des Detektionsmodes ändert. Dies kann einerseits gezielt genutzt werden, um die Frequenz (auf Doppelresonanz) einzustellen. Andererseits wird beispielsweise durch Modulationssignale für die Abgrifffunktion oder durch (drehratenabhängige) Rückstellspannungen die Resonanzfrequenz moduliert. Dieser Nachteil entfällt bei Kammantrieben. Bei Verwendung von Kammantrieben können zusätzlich Plattenkondensatoranordnungen mit Änderung des Plattenabstands integriert werden, um den oben beschriebenen Frequenzabgleich durchführen zu können.

Ferner ist anzumerken, dass weitere Kraftgeber, Abgriffe und / oder Vorrichtungen zum Frequenztuning 524, 624, 724, 824 auch für die jeweiligen Coriolis-Elemente vorgesehen werden können. Im gezeigten Beispiel handelt es sich um Plattenkondensatoranordnungen mit Änderung des Plattenabstands. Die Anordnungen bestehen aus bewegten Elektroden, die in den Coriolis-Elementen 520, 620, 720, 820 integriert sind, und aus am Substrat verankerten Elektroden 526. 626, 726, 826 (es ist jeweils nur eine Elektrode dargestellt).

Die Struktur der ersten Variante besitzt Moden mit Resonanzfrequenzen in der Nähe der Nutz-Moden, die durch lineare Beschleunigungen in x-Richtung und Drehbeschleunigungen um die z-Achse angeregt werden können. Dabei bewegen sich die Anregungseinheiten 510, 610, 710, 810 und die Corlolis-Elemente 520, 620, 720, 820 in x-Richtung. Im Vergleich zu einem parasitären Mode, bei dem die Erfassungseinheiten in y-Richtung bewegt werden, sind die resultierenden beschleunigungs- und vibrationsabhängigen Fehler jedoch gering.

Bei der ersten Variante führen je zwei Erfassungseinheiten zusammen eine Drehschwingung durch. Das führt dazu, dass bei dem gezeigten Beispiel mit Abgriffen 534, 634, 734, 834 mit feststehenden Elektroden 536, 636. 736. 836 die Änderung des Plattenabstands der Plattenkondensatoranordnungen ortsabhängig ist, was bei der Auslegung und der Linearisierung einen Mehraufwand bedeutet. Dieser Mehraufwand besteht nicht, wenn als Abgriffe / Kraftgeber z.B. die oben genannten Kammantriebe verwendet werden und der Frequenzabgleich über die Vorrichtungen 524, 624, 724, 824 durchgeführt wird.

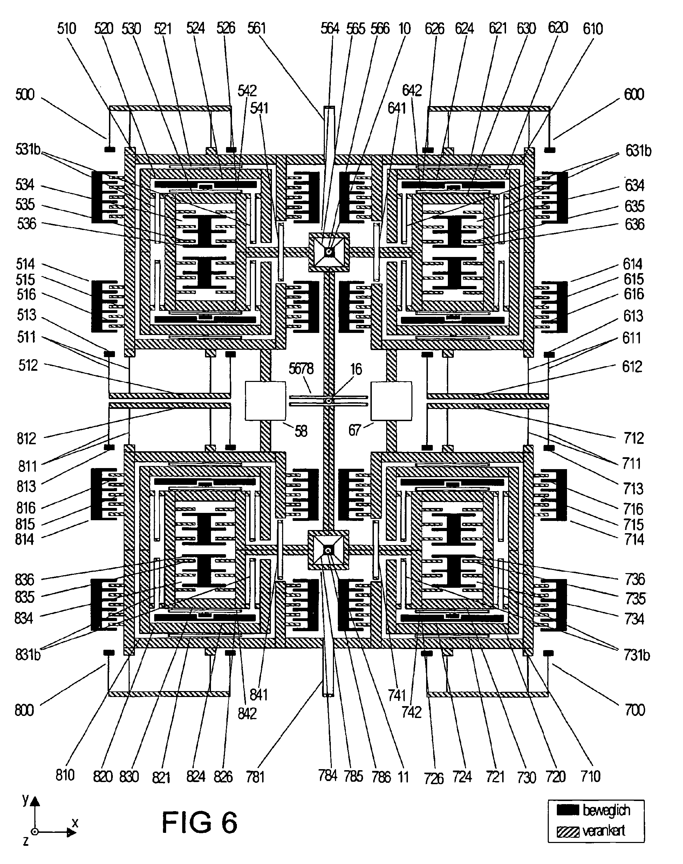

Außerdem kann eine lineare Schwingung der Erfassungseinheiten realisiert werden (s. Fig. 6 für die zweite Variante des Ausführungsbeispiels) durch zusätzliche Federn 541, 641, 741, 841, die in x-Richtung und bei Drehung um, ihre Symmetrieachse in z-Richtung weich, sonst möglichst steif sind, und zusätzlicher Verankerung der Erfassungseinheiten 530, 630. 730. 830 am Substrat über Federelemente 542, 642, 742, 842 die in y-richtung weich, sonst möglichst hart sind. Die Federelemente 531b, 631b. 731b, 831b, welche die Erfassungseinheiten 530, 630. 730. 830 mit den Coriolis-Elementen 520, 620, 720, 820 verbinden, können zweiseitig ausgeführt werden, da sie keine "Gelenkeigenschaft" aufweisen müssen.

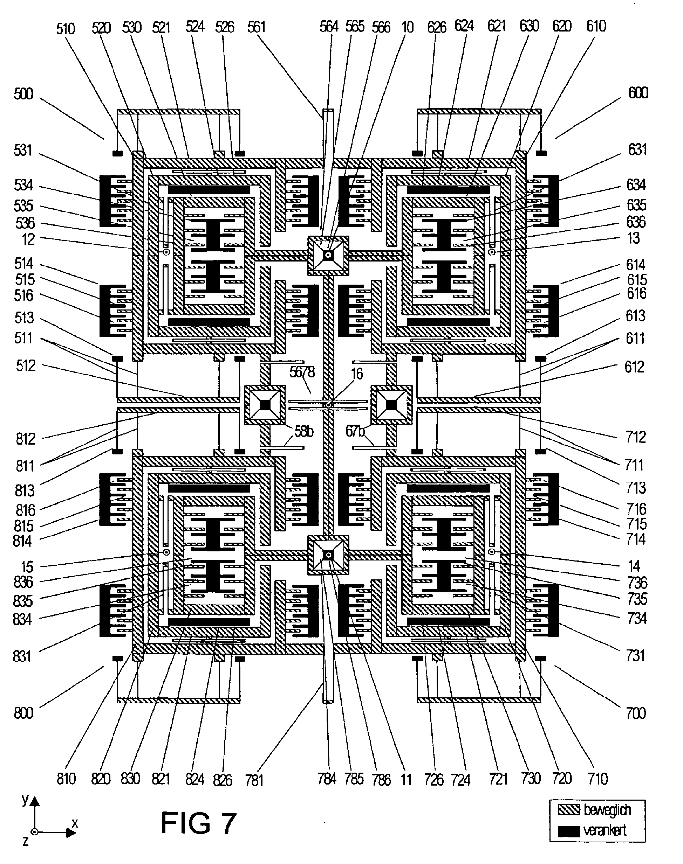

Die in Fig. 7 gezeigte dritte Variante entspricht weitgehend der ersten Variante mit folgender Modifikation:

• Die Federelemente 58b, 67b, welche die erste und vierte Anregungseinheit 510, 810, bzw. die zweite und dritte Anregungseinheit 610, 710 verbinden, sind so modifiziert, dass lineare Beschleunigungen in x-Richtung näherungsweise keine Auslenkung der Anregungseinheiten 510, 610, 710, 810 und der Coriolis-Elemente 520, 620, 720, 820 in x-Richtung bewirkt.

Bei der dritten Variante besitzt die Struktur Moden mit Resonanzfrequenzen in der Nähe der der Nutz-Moden, die durch Drehbeschleunigungen um die z-Achse angeregt werden können. Dabei bewegen sich die Anregungseinheiten 510, 610, 710, 810 und die Coriolis-Elemente 520, 620, 720, 820 in x-Richtung. Im Vergleich zu einem parasitären Mode, bei dem die Erfassungseinheiten in y-Richtung bewegt werden, sind die resultierenden beschleunigungs- und vibrationsabhängigen Fehler jedoch gering.

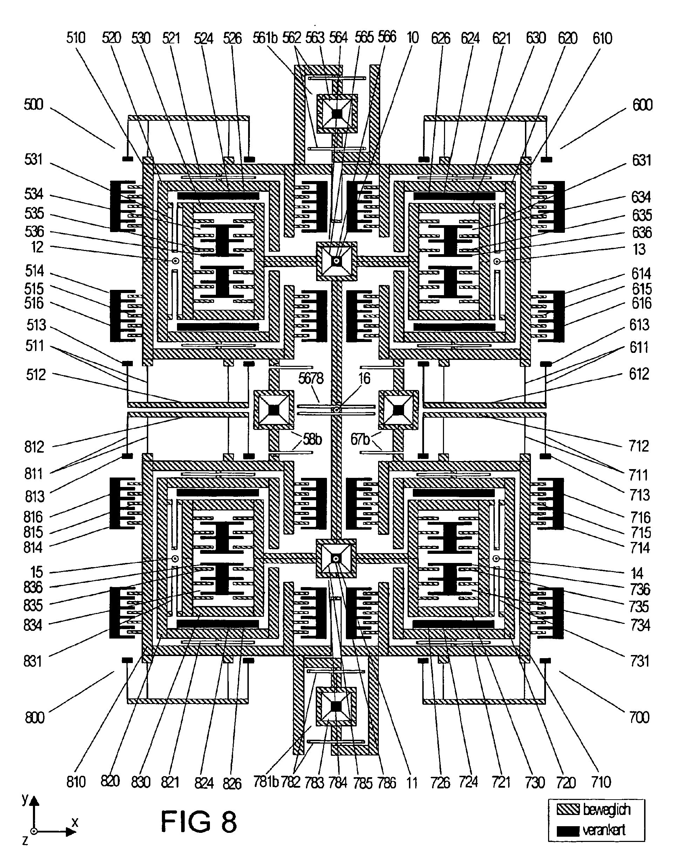

Die in Fig. 8 gezeigte vierte Variante entspricht weitgehend der dritten Variante mit folgender Modifikation:

• Die Federelemente 561b, 781b, welche die erste und zweite Anregungseinheit 510, 610 bzw. die dritte und vierte Anregungseinheit 710, 810 koppeln, sind so modifiziert, dass auch Drehbeschleunigungen um die z-Achse näherungsweise keine Auslenkung der Anregungseinheiten 510, 610, 710, 810 und der Coriolis-Elemente 520, 620, 720, 820 in x-Richtung bewirken. Die modifizierten Federelemente 561b, 781b umfassen dabei y-Drehfederelemente 562, 782, die weich bei Rotation um ihre Symmetrieachse (in z-Richtung) und bei Auslenkung in y-Richtung sind und sonst möglichst steif, und Drehfedern 563, 783, die entsprechend den Drehfedern 564, 784 ausgebildet sind.

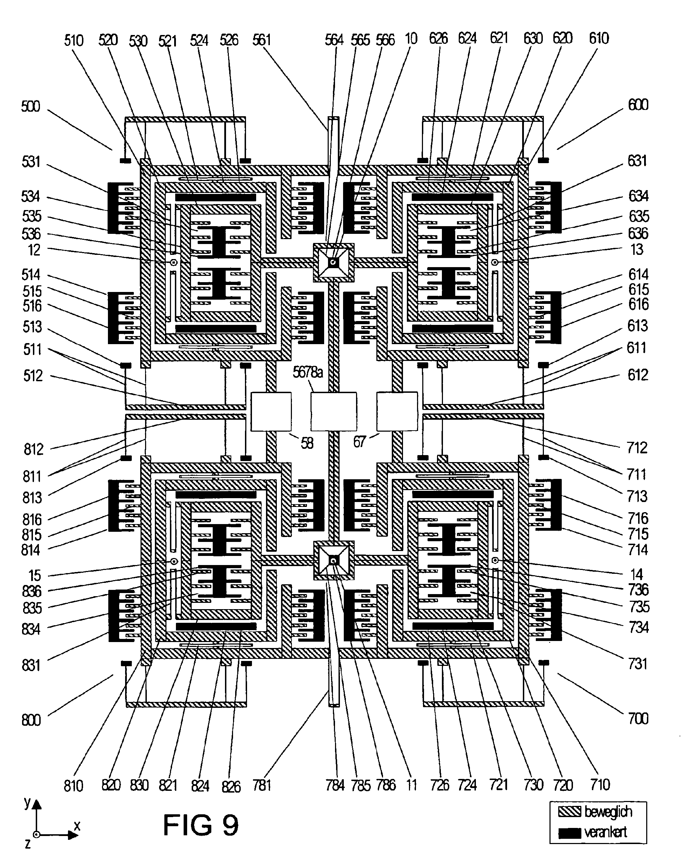

In Fig. 9 ist eine fünfte Variante gezeigt, welche weitgehend der ersten Variante entspricht, wobei die Feder 5678a die gleichphasige Rotation der Erfassungseinheiten 530, 630 und 730, 830 nicht sperrt, sondern nur eine Frequenzaufspaltung von Gleichtakt und Gegentakt bewirkt. Die Resonanzfrequenzen der Nutzmoden liegen dann noch nicht deutlich unterhalb der Resonanzfrequenzen der Moden, die durch Beschleunigungen und/oder Vibrationen angeregt werden können und ein wesentliches Fehlersignal verursachen.

In Fig. 10 ist eine sechste Variante gezeigt. Dabei umfassen die ersten bis vierten Einzelstrukturen 100, 200, 300, 400 jeweils nur eine einfache erste bis vierte Schwingstruktur 110, 210, 310, 410. Die Kopplung der Schwingstrukturen 110, 210, 310, 410 für die Erzeugung der abgeschlossenen Anregungsmode und Detektionsmode erfolgt durch xy-Federelemente 141, 241, die in der xy-Ebene weich, sonst möglichst hart ausgebildet sind. Zusätzlich kann der Detektionsmode durch die y-Drehfeder 1234 gekoppelt werden. Die dargestellte einfache Kopplung bewirkt, dass Moden mit Resonanzfrequenzen unterhalb der Nutzmoden existieren. Ansonsten entspricht die sechste Variante der ersten Variante. Der Detektionsmode lässt sich als zwei gegenphasige Drehschwingungen auffassen.

In Fig. 11 ist eine siebte Variante gezeigt. Dabei umfassen die erste bis vierte Einzelstruktur 500, 600, 700, 800 jeweils eine einfach entkoppelte Struktur aus ersten bis vierten Anr ungseinheiten 510, 610, 710, 810 und aus ersten bis vierten Erfässungseinheiten 550, 650, 750, 850. Die Kopplung zum abgeschlossenen Anregungsmode erfolgt durch xy-Federelemente 58, 67, die in x- und y-Richtung weich, sonst möglichst hart ausgebildet sind und zum abgeschlossenen Detektionsmode durch eine xy-Drehfeder 5678a, die in x- und y-Richtung und bei Torsion um ihre Symmetrieachse in z-Richtung weich, sonst möglichst hart ausgebildet ist. Die dargestellte einfache Kopplung führt dazu, dass Moden mit Resonanzfrequenzen unterhalb der Nutzmoden existieren. Ansonsten entspricht die siebte Variante der ersten Variante. Der Detektionsmode lässt sich als Mischform auffassen.

**Patentansprüche**

1. Corioliskreisel mit einer Anordnung, die ein Substrat (5, 24, 26), mindestens vier Einzelstrukturen (61, 63, 64, 500, 600. 700. 800) und Federelemente (z.B. 1, 2, 3, 23, 25) umfasst, wobei die Einzelstrukturen jeweils eine Erfassungseinheit aufweisen,

   wobei die Federelemente (z.B. 1, 2, 3. 23, 25) die Einzelstrukturen (61, 63, 64, 500. 600, 700, 800) mit dem Substrat (5, 24, 26) und untereinander koppeln, mit Kraftgebern (z.B. 514, 614. 714, 814) und mit Abgriffen (z.B. 534, 634, 734, 834), wobei die Anordnung mindestens einen Anregungsmode (7) besitzt, der von den Kraftgebern (z.B. 514, 614, 714, 814) angeregt werden kann und mindestens einen Detektionsmode (8), der von den Abgriffen (z.B. 534, 634, 734, 834) gemessen werden kann,

   wobei der Detektionsmode (8) bei angeregtem Anregungsmode bei einer Drehung des Corioliskreisels um eine sensitive Achse (Ω) aufgrund einer Corioliskraft anregbar ist, und

   wobei der Anregungsmode (7) zwei gekoppelte gegenphasige lineare Schwingungen von jeweils zwei der Einzelstrukturen, die wiederum gegenphasig sind, umfasst wobei,

   entweder jeweils eine Drehschwingung einer ersten und einer zweiten Erfassungseinheit (550, 650) um ihre Symmetrieachse (10) parallel zur sensitiven Achse (Ω) und einer dritten und einer vierten Erfassungseinheit (750, 850) um ihre Symmetrieachse (11) parallel zur sensitiven Achse (Ω) umfasst, wobei die beiden Drehschwingungen gekoppelt und gegenphasig sind,

   oder jeweils eine aus einer Drehschwingung parallel zu sensitiven Achse (Ω) über zusätzliche Federelement (531, 631, 731, 831) abgeleitete gegenphasige lineare Schwingung einer ersten und einer zweiten Erfassungseinheit (530, 630) und einer dritten und vierten Erfassungseinheit (730, 830) umfasst, wobei die beiden Drehschrungungen gekoppelt und gegenphasig sind und die beiden gegenphasigen linearen Schwingungen wiederum gegenphasig sind;

   **dadurch gekennzeichnet, dass** zwischen der ersten und zweiten Erfassungseinheit (530, 630 ; 550, 650) und zwischen der dritten und vierten Erfassungseinheit (730, 830; 750, 850) jeweils ein Drehfederelement (564, 784) vorgesehen ist,

   die Drehfederelemente (564, 784) jeweils Biegebalken (565, 785) und eine Verankerung am Substrat (566, 786) umfassen und so ausgelegt sind, dass sie bei Torsion um eine Symmetrieachse des jeweiligen Drehfederelements parallel zur sensitiven Achse (Ω) weich und für alle anderen Belastungen steif ausgebildet sind, und

   der Anregungsmode (7) und der Detektionsmode (8) abgeschlossene Eigenmoden der Anordnung sind, durch die theoretisch, das heißt bei optimaler Fertigung ohne Fertigungstoleranzen, keine Kräfte oder Momente auf die Umgebung des Corioliskreisels ausübbar sind.

2. Corioliskreisel nach Anspruch 1.
   **dadurch gekennzeichnet, dass**
   Kraftgeber (z.B. 534, 634, 734, 834) vorgesehen sind, um die Coriolis-Kraft zurückzustellen.

3. Corioliskreisel nach einem der Ansprüche 1 oder 2,
   **dadurch gekennzeichnet, dass**
   Abgriffe (z.B. 514, 614, 714, 814) vorgesehen sind, um die Bewegung des Anregungsmodes (7) zu messen.

4. Corioliskreisel nach einem der Ansprüche 1, 2 oder 3,
   **gekennzeichnet durch**
   Stellglieder (524, 624, 724, 824, 534, 634, 734, 834) zur Quadraturkompensation.

5. Corioliskreisel nach einem der Ansprüche 1 bis 4,
   **gekennzeichnet durch**
   Stellglieder (524, 624, 724, 824, 534, 634, 734, 834) zum Frequenzabgleich.

**6.** Corioliskreisel nach einem der Ansprüche 1 bis 5,
**dadurch gekennzeichnet, dass**
die Resonanzfrequenzen des Anregungsmodes (7) und Detektionsmodes (8) deutlich unterhalb der Resonanzfrequenzen der Moden liegen, die durch Beschleunigungen und / oder Vibrationen angeregt werden können und ein wesentliches Fehlersignal verursachen.

**7.** Corioliskreisel nach einem der Ansprüche 1 bis 6,
**dadurch gekennzeichnet, dass**
die Resonanzfrequenzen des Anregungsmodes (7) und Detektionsmodes (8) deutlich unterhalb der Resonanzfrequenzen aller anderen Eigenmoden der Anordnungen liegen.

**8.** Corioliskreisel nach Anspruch 1.
**dadurch gekennzeichnet, dass**
die Richtungen der linearen Schwingungen des Anregungsmodes (7) und des Detektionsmodes (8) parallel zur Substratoberfläche und
die Achsen der Drehschwingungen senkrecht zur Substratoberfläche liegen.

**9.** Corioliskreisel nach einem der Ansprüche 1 bis 8,
**dadurch gekennzeichnet, dass**
die Einzelstrukturen (500, 600, 700, 800) aus jeweils einer Anregungseinheit (510, 610, 710, 810) und einer Erfassungseinheit (550, 650, 750, 850) und somit entkoppelt ausgebildet sind.

**10.** Corioliskreisel nach einem der Ansprüche 1 bis 8.
**dadurch gekennzeichnet, dass**
die Einzelstrukturen (500, 600, 700, 800) aus jeweils einer Anregungseinheit (510, 610, 710, 810), einem Coriolis-Element (520, 620, 720, 820) und einer Erfassungseinheit (530, 630, 730, 830) und somit doppelt entkoppelt ausgebildet sind.

**11.** Corioliskreisel nach Anspruch 8,
**dadurch gekennzeichnet, dass**
die Einzelstrukturen (500, 600, 700, 800) aus jeweils einer Anregungseinheit (510, 610, 710, 810), einem Coriolis-Element (520, 620, 720, 820) und einer Erfassungseinheit (530, 630, 730. 830) und somit doppelt entkoppelt ausgebildet sind und dass
zwischen den Coriolis-Elementen (520, 620, 720, 820) und den jeweiligen Erfassungseinheiten (530, 630, 730, 830) jeweils ein x-Dreh-Federelement (531, 631, 731, 831) vorgesehen ist, welches eine relative Drehung und eine Abstandsänderung in Richtung der linearen Schwingungen des Anregungsmodes (7) erlaubt.

**12.** Corioliskreisel nach Anspruch 8.
**dadurch gekennzeichnet, dass**
die Einzelstrukturen (500, 600, 700, 800) aus jeweils einer Anregungseinheit (510, 610, 710, 810), einem Coriolis-Element (520, 620, 720, 820) und einer Erfassungseinheit (530, 630. 730, 830) und somit doppelt entkoppelt ausgebildet sind,
dass zwischen jeweils einer der zwei Erfassungseinheiten (530, 630. 730, 830) und dem jeweiligen Drehfederelement (564, 784) eine x-Drehfeder (541, 641, 741, 841) vorgesehen ist und
dass die Erfassungseinheiten (530, 630, 730, 830) über Federelemente (542, 642, 742, 842) am Substrat verankert sind.

**13.** Corioliskreisel nach einem der Ansprüche 1 bis 12,
**dadurch gekennzeichnet, dass**
vier Einzelstrukturen (61, 63, 64, 500, 600, 700, 800) vorgesehen sind.

**Claims**

**1.** A Coriolis gyro having an arrangement which comprises a substrate (5, 24, 26), at least four individual structures (61, 63, 64, 500, 600, 700, 800) and spring elements (for example 1, 2, 3, 23, 25), wherein the individual structures in each case comprise a detection unit,
wherein the spring elements (for example 1, 2, 3, 23, 25) couple the individual structures (61, 63, 64, 500, 600, 700, 800) to the substrate (5, 24, 26) and to one another, having force transmitters (for example 514, 614, 714, 814) and having taps (for example 534, 634, 734, 834), wherein the arrangement has at least one excitation mode (7) which can be excited by the force transmitters (for example 514, 614, 714, 814) and at least one detection mode (8) which can be measured by the taps (for example 534, 634, 734, 834),

wherein the detection mode (8) can be excited, in the excited excitation mode, by a Coriolis force when the Coriolis gyro is rotated about a sensitive axis ($\Omega$),

wherein the excitation mode (7) comprises two antiphase-coupled linear oscillations, which are once again in antiphase, of in each case two of the individual structures;

wherein the detection mode (8) comprises either in each case a rotary oscillation of a first and a second detection unit (550, 650) about their axis of symmetry (10), which is parallel to the sensitive axis ($\Omega$), and of a third and a fourth detection unit (750, 850) about their axis of symmetry (11), which is parallel to the sensitive axis ($\Omega$), wherein the two rotary oscillations are coupled antiphase oscillations,

or in each case an antiphase linear oscillation of a first and a second detection unit (530, 630) and a third and a fourth detection unit (730, 830), with the antiphase linear oscillation being transferred from a rotary oscillation, which is parallel to the sensitive axis ($\Omega$), via additional spring elements (531, 631, 731, 831), wherein the two rotary oscillations are coupled antiphase oscillations and the two antiphase linear oscillations are once again in antiphase,

**characterized in that**

a rotation spring element (564, 784) is in each case provided between the first and second detection unit (530, 630; 550, 650) and between the third and fourth detection unit (730, 830; 750, 850)

said rotation spring elements (564, 784) in each case comprise bending beams (565, 785) and an anchorage on the substrate (566, 786) and are designed to be soft in the event of torsion about an axis of symmetry, which is parallel to the sensitive axis ($\Omega$), of the respective rotary spring element and are stiff for all other loads, and

the excitation mode (7) and the detection mode (8) being closed eigenmodes of the arrangement, by means of which theoretically, that is to say if manufactured optimally without any manufacturing tolerances, no forces or moments can be exerted on the surrounding area of the Coriolis gyro.

2. The Coriolis gyro as claimed in claim 1,
**characterized in that**
force transmitters (for example 534, 634, 734, 834) are provided in order to reset the Coriolis force.

3. The Coriolis gyro as claimed in one of claims 1 or 2,
**characterized in that**
taps (for example 514, 614, 714, 814) are provided in order to measure the movement of the excitation mode (7).

4. The Coriolis gyro as claimed in one of claims 1, 2 or 3,
**characterized by**
actuating elements (524, 624, 724, 824, 534, 634, 734, 834) for quadrature compensation.

5. The Coriolis gyro as claimed in one of claims 1 to 4,
**characterized by**
actuating elements (524, 624, 724, 824, 534, 634, 734, 834) for frequency adjustment.

6. The Coriolis gyro as claimed in one of claims 1 to 5,
**characterized in that**
the resonant frequencies of the excitation mode (7) and detection mode (8) are considerably below the resonant frequencies of the modes which can be excited by accelerations and/or vibrations and cause a significant error signal.

7. The Coriolis gyro as claimed in one of claims 1 to 6,
**characterized in that**
the resonant frequencies of the excitation mode (7) and detection mode (8) are considerably below the resonant frequencies of all other eigenmodes of the arrangements.

8. The Coriolis gyro as claimed in claim 1,
**characterized in that**
the directions of the linear oscillations of the excitation mode (7) and of the detection mode (8) are parallel to the substrate surface, and
the axes of the rotary oscillations are at right angles to the substrate surface.

9. The Coriolis gyro as claimed in one of claims 1 to 8,
   **characterized in that**
   the individual structures (500, 600, 700, 800) are each formed from an excitation unit (510, 610, 710, 810), and a detection unit (550, 650, 750, 850), and are thus decoupled.

10. The Coriolis gyro as claimed in one of claims 1 to 8,
    **characterized in that**
    the individual structures (500, 600, 700, 800) are each formed from an excitation unit (510, 610, 710, 810), a Coriolis element (520, 620, 720, 820) and a detection unit (530, 630, 730, 830), and are thus double-decoupled.

11. The Coriolis gyro as claimed in claim 8,
    **characterized in that**
    the individual structures (500, 600, 700, 800) are each formed from an excitation unit (510, 610, 710, 810), a Coriolis element (520, 620, 720, 820) and a detection unit (530, 630, 730, 830), and are thus double-decoupled, and **in that** an x rotation spring element (531, 631, 731, 831) is in each case provided between the Coriolis elements (520, 620, 720, 820) and the respective detection units (530, 630, 730, 830) and allows a relative rotation and a distance change in the direction of the linear oscillations of the excitation mode (7).

12. The Coriolis gyro as claimed in claim 8,
    **characterized in that**
    the individual structures (500, 600, 700, 800) are each formed from an excitation unit (510, 610, 710, 810), a Coriolis element (520, 620, 720, 820) and a detection unit (530, 630, 730, 830), and are thus double-decoupled,
    **in that** an x rotation spring (541, 641, 741, 841) is provided between in each case one of the two detection units (530, 630, 730, 830) and the respective rotation spring element (564, 784), and
    **in that** the detection units (530, 630, 730, 830) are anchored on the substrate via spring elements (542, 642, 742, 842).

13. The Coriolis gyro as claimed in one of claims 1 to 12,
    **characterized in that**
    four individual structures (61, 63, 64, 500, 600, 700, 800) are provided.


**Revendications**

1. Gyroscope de Coriolis avec un dispositif qui comprend un substrat (5, 24, 26), au moins quatre structures individuelles (61, 63, 64, 500, 600, 700, 800) et des éléments à ressort (par exemple 1, 2, 3, 23, 25),
   étant précisé que les structures individuelles comportent chacune une unité de détection,
   que les éléments à ressort (par exemple 1, 2, 3, 23, 25) couplent les structures individuelles (61, 63, 64, 500, 600, 700, 800) au substrat (5, 24, 26) et les unes aux autres, avec des générateurs de force (par exemple 514, 614, 714, 814) et des capteurs (par exemple 534, 634, 734, 834), que le dispositif a au moins un mode d'excitation (7) qui peut être excité par les générateurs de force (par exemple 514, 614, 714, 814), et au moins un mode de détection (8) qui peut être mesuré par les capteurs (par exemple 534, 634, 734, 834),
   que le mode de détection (8), quand le mode d'excitation est excité, est apte à être excité lors d'une rotation du gyroscope de Coriolis sur son axe sensible ($\Omega$) en raison d'une force de Coriolis, et
   que le mode d'excitation (7) comprend deux vibrations linéaires couplées, de phases opposées, de deux des structures individuelles, elles-mêmes de phases opposées ;
   que le mode de détection (8) comprend soit une vibration de torsion d'une première unité et d'une deuxième unité de détection (550, 650) sur leur axe de symétrie (10) parallèle à l'axe sensible ($\Omega$), et d'une troisième et d'une quatrième unité de détection (750, 850) sur leur axe de symétrie (11) parallèle à l'axe sensible ($\Omega$), les deux vibrations de torsion étant couplées et de phases opposées,
   soit une vibration linéaire de phases opposées, dérivée d'une vibration de torsion parallèle à l'axe sensible ($\Omega$) par l'intermédiaire d'éléments à ressort supplémentaires (531, 631, 731, 831), d'une première et d'une deuxième unité de détection (530, 630) et d'une troisième et d'une quatrième unité de détection (730, 830), les deux vibrations de torsion étant couplées et de phases opposées et les deux vibrations linéaires de phases opposées étant elles-mêmes de phases opposées,
   **caractérisé en ce qu'**il est prévu entre les première et deuxième unités de détection (530, 630 ; 550, 650) et entre les troisième et quatrième unités de détection (730, 830 ; 750, 850) un élément à ressort de torsion (564, 784),
   **en ce que** les éléments à ressort de torsion (564, 784) comprennent des barres de flexion (565, 758) et un ancrage au substrat (566, 786) et sont conçus pour être souples en cas de torsion sur un axe de symétrie de l'élément à ressort de torsion correspondant parallèle à l'axe sensible (Ω), et raide pour toutes les autres contraintes,
**en ce que** le mode d'excitation (7) et le mode de détection (8) sont des modes propres fermés du dispositif grâce auxquels théoriquement, c'est-à-dire en cas de fabrication optimale sans tolérances de fabrication, aucune force ou moment ne peut être exercé sur l'environnement du gyroscope de Coriolis.

2. Gyroscope de Coriolis selon la revendication 1, **caractérisé en ce qu'**il est prévu des générateurs de force (par exemple 534, 634, 734, 834) pour le rappel de la force de Coriolis.

3. Gyroscope de Coriolis selon l'une des revendications 1 à 2, **caractérisé en ce qu'**il est prévu des capteurs (par exemple 514, 614, 714, 814) pour mesurer le mouvement du mode d'excitation (7).

4. Gyroscope de Coriolis selon l'une des revendications 1, 2 ou 3, **caractérisé par** des actionneurs (524, 624, '724, 824, 534, 634, 734, 834) pour une compensation de quadrature.

5. Gyroscope de Coriolis selon l'une des revendications 1 à 4, **caractérisé par** des actionneurs (524, 624, 724, 824, 534, 634, 734, 834) pour une égalisation de fréquence.

6. Gyroscope de Coriolis selon l'une des revendications 1 à 5, **caractérisé en ce que** les fréquences de résonance du mode d'excitation (7) et du mode de détection (8) sont situées nettement au-dessous des fréquences de résonance des modes qui peuvent être excités par des accélérations et/ou des vibrations et qui provoquent un signal d'erreur sensible.

7. Gyroscope de Coriolis selon l'une des revendications 1 à 6, **caractérisé en ce que** les fréquences de résonance du mode d'excitation (7) et du mode de détection (8) sont situées nettement au-dessous des fréquences de résonance de tous les autres modes propres des dispositifs.

8. Gyroscope de Coriolis selon la revendication 1, **caractérisé en ce que** les directions des vibrations linéaires du mode d'excitation (7) et du mode de détection (8) sont parallèles à la surface du substrat, et les axes des vibrations de torsion sont perpendiculaires à la surface du substrat.

9. Gyroscope de Coriolis selon l'une des revendications 1 à 8, **caractérisé en ce que** les structures individuelles (500, 600, 700, 800) se composent chacune d'une unité d'excitation (510, 610, 710, 810) et d'une unité de détection (550, 560, 850, 850) et sont ainsi découplées.

10. Gyroscope de Coriolis selon l'une des revendications 1 à 8, **caractérisé en ce que** les structures individuelles (500, 600, 700, 800) se composent chacune d'une unité d'excitation (510, 610, 710, 810), d'un élément de Coriolis (520, 620, 720, 820) et d'une unité de détection (530, 630, 730, 830) et sont ainsi doublement découplées.

11. Gyroscope de Coriolis selon la revendication 8, **caractérisé en ce que** les structures individuelles (500, 600, 700, 800) se composent chacune d'une unité d'excitation (510, 610, 710, 810), d'un élément de Coriolis (520, 620, 720, 820) et d'une unité de détection (530, 630, 730, 830) et sont ainsi doublement découplées,
et **en ce qu'**il est prévu entre les éléments de Coriolis (520, 620, 720, 820) et les unités de détection correspondantes (530, 630, 730, 830) un élément à ressort de torsion x (531, 631, 731, 831) qui permet une rotation relative et une variation d'écartement dans le sens des vibrations linéaires du mode d'excitation (7).

12. Gyroscope de Coriolis selon la revendication 8, **caractérisé en ce que** les structures individuelles (500, 600, 700, 800) se composent chacune d'une unité d'excitation (510, 610, 710, 810), d'un élément de Coriolis (520, 620, 720, 820) et d'une unité de détection (530, 630, 730, 830) et sont ainsi doublement découplées,
**en ce qu'**il est prévu entre l'une des deux unités de détection (530, 630, 730, 830) et l'élément à ressort de torsion correspondant (564, 784) un ressort de torsion x (541, 641, 741, 841) et
**en ce que** les unités de détection (530, 630, 730, 830) sont ancrées au substrat par l'intermédiaire d'éléments à ressort (542, 642, 742, 842).

13. Gyroscope de Coriolis selon l'une des revendications 1 à 12, **caractérisé en ce qu'**il est prévu quatre structures individuelles (61, 63, 64, 500, 600, 700, 800).

FIG 1

FIG 2a

FIG 2b

EP 2 162 702 B1

FIG 3

FIG 4

17

FIG 5

SSSS beweglich
■■■ verankert

FIG 6

FIG 7

FIG 8

FIG 9

**FIG 10**

bewegllch
verankert

FIG 11

bewglich
verankert

# EP 2 162 702 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19641284 C1
- EP 1515119 A1
- EP 1793202 A2
- WO 2006113162 A1
- WO 9534798 A

**In der Beschreibung aufgeführte Nicht-Patentliteratur**

- **P. GREIFF ; B. BOXENHORN ; T. KING ; L. NILES.** Silicon Monolithic Micromechanical Gyroscope. *Tech. Digest, 6th Int. Conf. on Solid-State Sensors and Actuators (Transducers '91,* Juni 1991, 966-968

- **J. BERNSTEIN ; S. CHO ; A.T. KING ; A. KOUREPINS ; P. MACIEL ; M. WEINBERG.** A Micromachined Comb-Drive Tuning Fork Rate Gyroscope. *Proc. IEEE Micro Electromechanical Systems Workshop (MEMS 93,* Februar 1993, 143-148